(19)

Europäisches
Patentamt
European
Patent Office
Office européen
des brevets

(11) **EP 4 043 099 A1**

(12) **EUROPEAN PATENT APPLICATION**
published in accordance with Art. 153(4) EPC

(43) Date of publication:
**17.08.2022 Bulletin 2022/33**

(21) Application number: **20875323.6**

(22) Date of filing: **07.10.2020**

(51) International Patent Classification (IPC):
*B01J 13/00* $^{(2006.01)}$          *B01J 20/32* $^{(2006.01)}$
*C08J 9/42* $^{(2006.01)}$          *C08J 9/28* $^{(2006.01)}$

(86) International application number:
**PCT/ES2020/070607**

(87) International publication number:
**WO 2021/069783 (15.04.2021 Gazette 2021/15)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **07.10.2019 ES 201930871**

(71) Applicant: **Consejo Superior De Investigaciones
Científicas
28006 Madrid (ES)**

(72) Inventors:
• **MARTÍNEZ SANZ, Marta
46980 Paterna (Valencia) (ES)**
• **LÓPEZ RUBIO, Amparo
46980 Paterna (Valencia) (ES)**
• **BENITO GONZÁLEZ, Isaac
46980 Paterna (Valencia) (ES)**

(74) Representative: **Pons
Glorieta Rubén Darío 4
28010 Madrid (ES)**

(54) **METHOD FOR PREPARING HYDROPHOBIC AEROGELS**

(57)    The present invention relates to a method for obtaining highly absorbent hydrophobic aerogels that have good mechanical properties, by freeze-drying aqueous dispersions of a biodegradable polymer (such as cellulose), followed by immersing in solutions of more hydrophobic biopolymers, and subsequently drying. The aerogels have high oil sorptivity.

EP 4 043 099 A1

## Description

The present invention relates to a method for obtaining highly porous materials, known as aerogels, with very good mechanical properties and high resistance to humidity.

## BACKGROUND OF THE INVENTION

Aerogels are structures formed by a polymeric matrix that have very low density and high porosity (>98%). These structures are very useful for use thereof as absorbent materials (since they are capable of absorbing large amounts of liquids) and for the controlled release of compounds, with applications in very diverse fields such as development of packaging, food or biomedical structures. Most aerogels described in the literature are obtained by means of complex processes, that require multiple processing steps and the use of solvents, chemical compounds and polluting processes. Furthermore, simpler methods have been reported, but they give rise to aerogels that are not very resistant and sensitive to humidity.

In recent times, aerogels have gained special relevance due to the fact that their high porosity gives them very interesting properties, such as low density, very high capacity of liquid absorption and capacity for the controlled release of bioactive compounds. Thus, a way to optimise their and adapt their properties depending on the future application has been sought. Traditionally, aerogels have been developed from non-biodegradable materials such as silica or carbon. More recently, other materials such as graphene or cellulose have been explored for the development of these materials (De France, K. J. et al (2017) Chemistry of Materials, 29(11), 4609-4631; Hu, H. et al. (2013) Advanced materials, 25(15), 2219-2223; Nguyen, S. T. et al (2013). Industrial & engineering chemistry research, 52(51), 18386-18391). Although cellulose has the advantages of being a renewable and biodegradable material, with a relatively low cost and good mechanical properties, the highly hydrophilic nature thereof causes the aerogels of this material to be highly sensitive to humidity and, therefore, greatly limits their range of application. Furthermore, the methods for obtaining aerogels reported in the literature are quite complex and involve organic solvent exchange steps and the use of expensive processes such as supercritical fluid drying. Other alternatives such as freeze-drying have been studied *a posteriori* (Pekala, R. et al.(1998) Journal of non-crystalline solids, 225, 74-80; Pierre, A. C. et al. (2002) Chemical Reviews, 102(11), 4243-4266).

Other documents relating to hydrophobic aerogels, are documents EP0653377B1 and

US2978298A, which use supercritical fluids to eliminate solvents without destroying the structure and their base is made up of silica (like most of the aerogels reported in the literature).

Furthermore, document CN1101725C discloses a method that hydrophobises the skeleton of the aerogel (composed of silica) by silylation of the surface thereof, the novelty of which lies in not using chlorinated compounds that derive in polluting byproducts.

Document US6005012A uses organometallic agents which, upon reacting with the alkaline groups present in the aerogel, give rise to bonds that hydrophobise the surface thereof.

Patent CN101646622B also discloses the silylation of its surface (again silica aerogel) through the use of hydrophobic solvents and high pressures.

Furthermore, regarding the few patent documents that deal with hydrophobic aerogels formed from cellulose, patent CN103756006A relates to a method that disperses, ultrasonicates, and freeze-dries the material to form the aerogel, but hydrophobises it by adding solvents such as ethanol or butanol, which are substituted by supercritical conditions to hydrophobise the surface thereof.

Likewise, patent CN104710647A also includes the silylation of aerogels formed from cellulose.

Lastly, the closest thing to what is proposed in this invention and that is contained in the literature is the reinforcement of cellulosic aerogels by adding biopolymers such as PLA, PCL, CA and PMMA using supercritical fluids such as $CO_2$ (Pircher, N. et al. (2014) Carbohydrate Polymers, 111, 505-513.) which, despite using the same biopolymers (although the cellulose is of bacterial origin), contains a more complex method (which requires autoclaving, high pressures and organic solvents, and a time exceeding 24 hours).

As an alternative to the methods known in the state of the art, the present invention proposes a new method for preparing hydrophobic aerogels in a simple way, in mild conditions and in an environmentally-friendly manner.

## DESCRIPTION OF THE INVENTION

A gel is a colloidal system wherein the continuous phase is solid and the discontinuous phase is liquid. Although gels have a similar density to liquids, the structure thereof is more like that of a solid. Certain gels have the ability to pass from one colloidal state to another, i.e., they remain fluid when stirred and solidify when they remain motionless. It is possible to create aerogels by replacing the liquid with gas: materials with exceptional properties such as very low densities, high porosity and excellent thermal insulation.

The inventors of the present invention have found a method for obtaining hydrophobic, highly absorbent aerogels with good mechanical properties, by freeze-drying aqueous dispersions of a biodegradable polymer (such as cellulose), followed by immersing in solutions of more hydrophobic biopolymers and subsequent drying.

The aerogel that is obtained with the method of the present invention is, therefore, made up of a matrix composed of a hydrophilic biopolymer, said matrix being coated with another biopolymer that has a lower hydrophilicity (more hydrophobic) than the one forming the matrix. It is a three-dimensional rigid sponge structure having an interconnected porosity of pores of variable size that can range between 15 and 100 $\mu$m and that exhibits a high sorption capacity for hydrophobic liquids such as, for example, various oils. Oil sorption measured at a temperature of 25 °C shows high sorption values, resulting in values of up to 10 grams incorporated per gram of aerogel (sorption is understood as the retention of one substance by another when they are in contact; it includes absorption and adsorption operations).

The resulting aerogel exhibits a high porosity, with resulting densities between 112 mg/cm$^3$ and 232 mg/cm$^3$

Then, in one aspect, the present invention relates to a method for obtaining a hydrophobic aerogel comprising the following steps:

a) preparing a homogeneous aqueous dispersion of a hydrophilic biopolymer and subsequently freeze-drying the same, thus obtaining the matrix of the aerogel,
b) immersing the matrix prepared in the previous step in a solution of a less hydrophilic (or more hydrophobic) biopolymer than the one used in step (a),
c) collecting the aerogel obtained in step b) and drying the same.

"Biopolymer" in the present invention is understood as a polymer synthesised by living beings. In particular, the biopolymers used come from renewable sources.

The term "hydrophilic" relates to the contact angle for water being less than 90°, which means that the drop of water wets the surface. The term "hydrophobic", therefore, relates to the fact that the contact angle for water is greater than 90°, which means that the drop of water does not wet the surface in question. A polymer that is less hydrophilic (or more hydrophobic) than another is one that has a higher contact angle than that of the other polymer.

As used herein, the term "contact angle" is known as the angle between a stationary drop of deionised water and a flat, horizontal surface on which the drop is placed. Contact is conventionally measured through the liquid, wherein a liquid/vapour interface meets a solid surface, and the wettability of a solid surface by a liquid is quantified. The larger the contact angle, the greater the hydrophobic interaction between the surface and the liquid. If a liquid extends completely over the surface and forms a film, the contact angle is zero degrees (0°). As the contact angle increases, resistance to wetting increases, up to a theoretical maximum of 180°, wherein the liquid forms spherical drops on the surface.

In step a), which includes the preparation of the primary aerogel that will make up the structural matrix, highly porous materials are obtained that have an excessive affinity for water, affecting the structural properties thereof and, therefore, limiting its application. Thus, a subsequent treatment is required to hydrophobise the material (and therefore give it strength and integrity in conditions of high relative humidity or even immersion or contact with a hydrophilic liquid) and at the same time to enable the mechanical resistance thereof to be increased to broaden its range of application. Thus, step (b) of the preparation of these aerogels consists of the immersion thereof in a solution of a more hydrophobic (or less hydrophilic) biopolymer, which also preferably comes from renewable sources. After a certain immersion time, the aerogel is collected and left to dry for the time required for the evaporation of the solvent used. Due to the great porosity of the aerogels produced in step (a), the hydrophobic biopolymeric solution penetrates easily and quickly throughout the structure, which gives rise to a hydrophobisation of the material that also enables the mechanical properties of the structure to be improved quickly and easily.

In a preferred embodiment, the hydrophilic biopolymer of step a) is selected from the list consisting of: cellulose, chitin, agar, carrageenan, starch, etc. More preferably, the hydrophilic biopolymer is cellulose.

In a preferred embodiment, the hydrophilic biopolymer has a concentration of between 0.1 and 5% by weight in the dispersion prepared in step a), more preferably between 0.5 and 2% by weight

In a preferred embodiment, the freeze-drying conditions of step a) are the following: Pre-freezing at -21 °C (optional), and vacuum at a pressure between 8 and 13 Pa, preferably 10.5, at a temperature between -65 and -85 °C, preferably -75°C for 12-24 hours.

In a preferred embodiment, the biopolymer of step b) (which must have greater hydrophobicity than that of step a)) is selected from the list consisting of: polylactic acid (PLA), polycaprolactone (PCL), polyhydroxybutyrate (PHB), poly(3-hydroxybutyrate-co-3-hydroxyvalerate) (PHBV), etc. More preferably, the hydrophilic biopolymer is polylactic acid (PLA).

In a more preferred embodiment, the hydrophilic biopolymer of step a) is cellulose and that of step b) is polylactic acid (PLA).

In a preferred embodiment, the solution of the less hydrophilic biopolymer from step b) has a biopolymer concentration of between 1 and 10% (w/v), preferably 5% (w/v).

In another preferred embodiment, the solvent of the less hydrophilic biopolymer solution used in step b) is selected from chloroform, methanol, isopropanol, trifluoroethylene, acetone, etc., preferably chloroform.

In another preferred embodiment, the immersion time of step b) varies between 1 second and 300 seconds, more preferably, the immersion time is one minute.

The drying of step c) is preferably carried out under ambient conditions (20-25 °C) for approximately 30 minutes, until complete evaporation of the solvent. If it is toxic, it will be done in a flow hood.

As described, in a very short time and using very simple processes (unlike the majority of complex methods currently used, which usually involve the use of supercritical fluids and high-cost coatings), the method of the present invention enables the development of materials that are hydrophobic, highly absorbent and with good mechanical integrity. For this purpose, the method of the present invention uses materials of a renewable and biodegradable nature and with low cost, in addition to reducing the use of solvents that are harmful to the environment and not using supercritical fluids.

As possible applications, given the high oil sorption capacity (>900%, i.e., 1 g of aerogel can absorb up to 9 g of oil and water (>600%) of these materials, they could be used as absorbent structures in food packaging (such as the absorbent pads found in meat or fish trays) or as matrices for the selective sorption of oils or hydrophobic spills in seawater ("oil spill"), since they are capable of preferentially sorbing hydrophobic liquids in mixtures with hydrophilic liquids.

Throughout the description and the claims, the word "comprises" and its variants do not intend to exclude other technical features, additives, components or steps. For those skilled in the art, other objects, advantages and features of the invention may be partially deduced from both the description and the embodiment of the invention. The following examples and figures are provided by way of illustration and are not intended to limit the present invention.

**BRIEF DESCRIPTION OF THE FIGURES**

**Fig. 1.** Cellulose aerogel (A) and cellulose aerogel + PLA (B) to the naked eye and the morphology of the same observed using SEM (scanning electron microscopy).

**Fig. 2.** Contact angle in cellulose aerogels with and without PLA.

**Fig. 3.** Oil incorporated (%) in the PLA-hydrophobicised aerogel.

**Fig. 4.** Representation of the mechanical properties (deformation) of the aerogels of the present invention.

**EXAMPLES**

Next, the invention will be illustrated by means of assays carried out by the inventors that demonstrate the effectiveness of the product of the invention.

**Example 1: preparation of hydrophobic hydrogels:**

Hydrophobic aerogels were prepared according to the following reaction steps:

(a) Preparation of the aerogel matrix: The cellulose was dispersed in water at a known low concentration (0.5% by weight) using Ultraturrax ® for 60 seconds until the material was homogeneously distributed. The resulting aqueous dispersion was freeze-dried at - 75 °C and 10 Pa, thus obtaining an aerogel composed of 100% cellulose.
(b) Hydrophobisation of aerogels: A 5% (w/v) solution of polylactic acid (PLA) in chloroform was prepared. Next, the aerogel obtained in step (a) was immersed for 1 minute. Subsequently, the aerogel was extracted and dried until the solvent used had completely evaporated (30 minutes). This process enabled the more hydrophobic biopolymer (PLA) to fill the pores of the aerogel, a material being obtained with a hydrophobic nature and better mechanical properties, but without changing the appearance of the same.

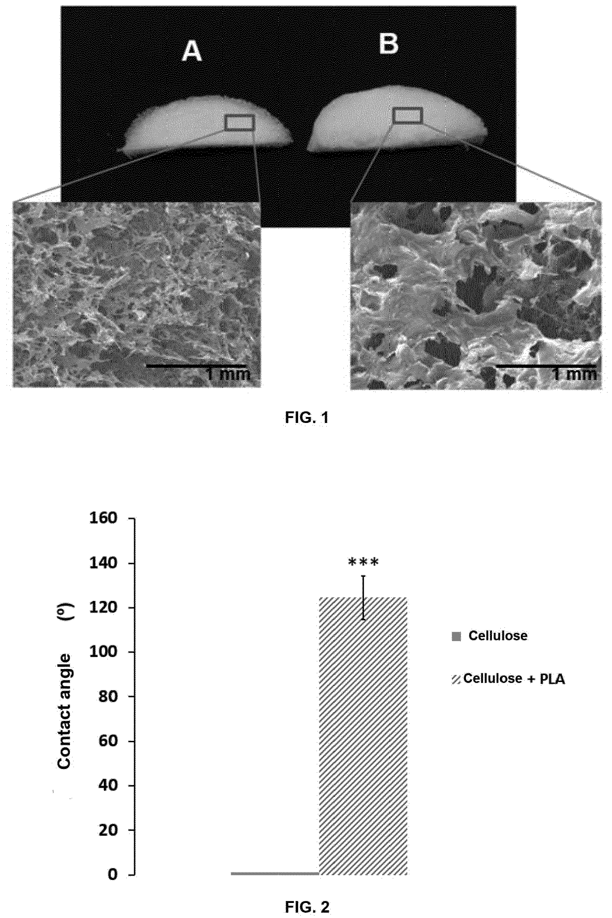

As shown in Figure 1, the appearance of the initial aerogel (matrix) and after hydrophobisation is very similar, without significant differences in colour. However, it can be seen how the PLA fills and coats the pores in the hydrophobicised aerogel in a more thorough manner, giving greater consistency and density, as can be confirmed through the SEM images.

**Example 2: Measurements of parameters and properties of aerogels Density**

In this case, the density data collected below were obtained from aerogels formed in Petri dishes.

However, it has been found that these structures can be formed in different types of moulds to produce more varied shapes and structures.

Density data was collected at room temperature (20-25 °C) and thickness was measured with a vernier calliper, weight on a precision balance and diameter with a ruler. Volume of the aerogel = $\pi(2.25)^2 \times 0.5 = 7.952$ cm$^3$

Weights (3 measurements were performed and the mean was calculated):

$$\text{Without PLA (g)} = \quad (1)\ 0.788 \rightarrow \text{Density} = 0.099 \text{ g/cm}^3$$
$$(2)\ 0.808 \rightarrow \text{Density} = 0.102 \text{ g/cm}^3$$
$$(3)\ 0.774 \rightarrow \text{Density} = 0.097 \text{ g/cm}^3$$

$$\text{MEAN without PLA} = 0.099 \pm 0.002 \text{ (g/cm}^3)$$

$$\text{With PLA (g)} = \quad (1)\ 1.6942 \rightarrow \text{Density} = 0.213 \text{ g/cm}^3$$
$$(2)\ 1.8489 \rightarrow \text{Density} = 0.234 \text{ g/cm}^3$$
$$(3)\ 1.773 \rightarrow \text{Density} = 0.223 \text{ g/cm}^3$$

$$\text{MEAN with PLA} = 0.223 \pm 0.009 \text{ (g/cm}^3)$$

**Contact angle**

The addition of the more hydrophobic biopolymer implies a radical change in the surface affinity of the same, as can be observed in Figure 2, the contact angle changes from practically zero (typical of a hydrophilic material) to greater than 120° (typical of hydrophobic materials). While pure cellulose fully absorbs the drop of water, PLA-hydrophobised aerogel produces contact angle values comprised between 110 and 130°, measured in a Video-Based Contact Angle Meter model OCA 20.

**Oil sorption**

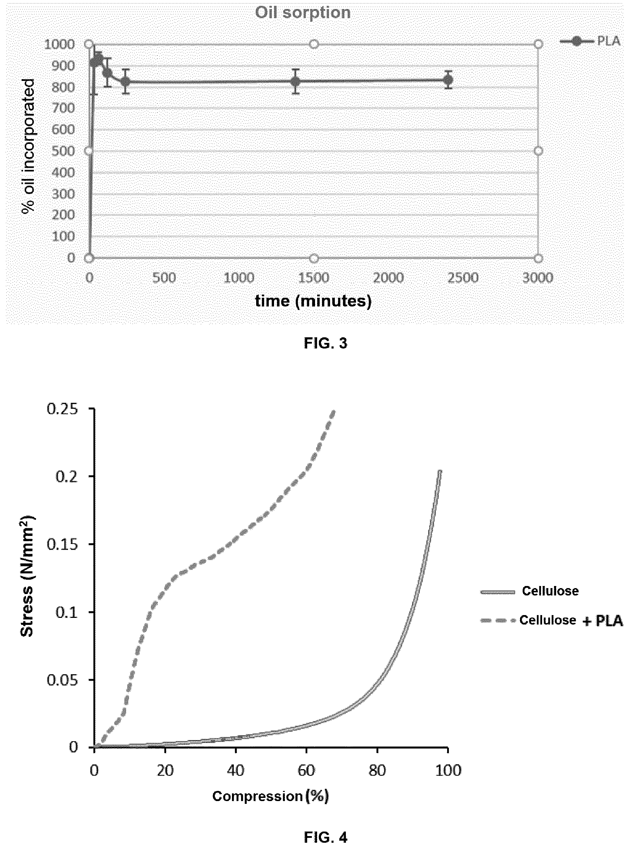

The prepared aerogels have great potential for oil sorption, being therefore useful in various applications (such as crude oil spills). In the example shown, we see the oil sorption values, exceeding up to 900% in relation to the initial weight of the aerogel (cellulose + PLA) (Figure 3).

Moreover, hydrophobicised aerogels are capable of selectively sorbing hydrophobic liquids. As an example, the cellulose aerogel+PLA has been submerged in an oil/water mixture, wherein the aerogel is observed to practically "repel" the water, in fact incorporating more residual oil on the edges and barely adsorbing water on the surface while it is observed how it absorbs all the oil possible when it comes into contact with this medium, reaching values similar to those previously obtained (900%).

**Mechanical properties**

In the case of mechanical properties, once again we observe a very evident increase in the mechanical resistance to compression of these materials when incorporating PLA. While cellulose alone does not exceed 0.05 N/mm$^2$ until the final steps of compression (>70% deformation), the aerogel that incorporates the PLA rapidly increases Young's modulus from the earliest steps (<20% deformation). Therefore, the force required to achieve an initial deformation is much greater in the one that incorporates PLA, these aerogels being much more resistant to compression and, therefore, expanding the possibilities for use thereof.

**Claims**

1. A method for obtaining a hydrophobic aerogel comprising the following steps:

   a) preparing a homogeneous aqueous dispersion of a hydrophilic biopolymer and subsequently freeze-drying the same, thus obtaining the matrix of the aerogel,
   b) immersing the matrix prepared in the previous step in a solution of a less hydrophilic biopolymer than the one used in step (a), and
   c) collecting the aerogel obtained in step b) and drying the same.

2. The method, according to claim 1, wherein the hydrophilic biopolymer of step a) is selected from the list consisting of: cellulose, chitin, agar, carrageenan and starch.

3. The method, according to claim 1, wherein the hydrophilic biopolymer of step a) is cellulose.

4. The method, according to any of claims 1 to 3, wherein the hydrophilic biopolymer has a concentration of between 0.1 and 5% by weight in the dispersion prepared in step a).

5. The method, according to any of claims 1 to 4, wherein the freeze-drying conditions of step a) are as follows: vacuum at a pressure of between 8 and 13 Pa, at a temperature between -65 to -85°C for 12-24 hours.

6. The method, any of claims 1 to 5, wherein the less hydrophilic biopolymer of step b) is selected from the list consisting of: polylactic acid, polycaprolactone, polyhydroxybutyrate, poly(3-hydroxybutyrate-co-3-hydroxyvalerate).

7. The method, according to claim 6, wherein the biopolymer of step b) is polylactic acid.

8. The method, any of claims 1 to 7, wherein the solution prepared in step b) has a biopolymer concentration of between 1 and 10% (w/v).

9. The method, any of claims 1 to 8, wherein the solvent used in the solution of step b) is selected from the list consisting of: chloroform, methanol, isopropanol, trifluoroethylene and acetone.

10. The method, any of claims 1 to 9, wherein the immersion time of step b) varies between 1 and 300 seconds.

**FIG. 1**

**FIG. 2**

FIG. 3

FIG. 4

## INTERNATIONAL SEARCH REPORT

| | International application No. |
|---|---|
| | PCT/ES2020/070607 |

### A. CLASSIFICATION OF SUBJECT MATTER

See extra sheet

According to International Patent Classification (IPC) or to both national classification and IPC

### B. FIELDS SEARCHED

Minimum documentation searched (classification system followed by classification symbols)
B01J, C08J

Documentation searched other than minimum documentation to the extent that such documents are included in the fields searched

Electronic data base consulted during the international search (name of data base and, where practicable, search terms used)

EPODOC, INVENES, WPI, EMBASE, MEDLINE, BIOSIS, NPL, XPESP, PATENW

### C. DOCUMENTS CONSIDERED TO BE RELEVANT

| Category* | Citation of document, with indication, where appropriate, of the relevant passages | Relevant to claim No. |
|---|---|---|
| A | US 2016068650 A1 (DUONG HAI MINH  *et al.*) 10/03/2016; paragraphs [0017], [0056]-[0057], [0078]; examples 1, 5. | 1-10 |
| A | US 2019282988 A1 (DUONG HAI MINH  *et al.*) 19/09/201; paragraphs [0052]-[0059]; example 2. | 1-10 |
| A | CN 110128694 A (UNIV ZHEJIANG TECHNOLOGY) 16/08/2019, (abstract) [on line] [retrieved on 23.03.2020]. Retrieved from: EPOQUE WPI Database; DW201969; n° acceso 2019-72740 A. | 1-10 |

☒ Further documents are listed in the continuation of Box C.          ☒ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance. | |
| "E" | earlier document but published on or after the international filing date | |
| "L" | document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" | document referring to an oral disclosure use, exhibition, or other means. | "Y" document of particular relevance; the claimed invention cannot be considered to involve an inventive step when the document is combined with one or more other documents , such combination being obvious to a person skilled in the art |
| "P" | document published prior to the international filing date but later than the priority date claimed | "&" document member of the same patent family |

| Date of the actual completion of the international search | Date of mailing of the international search report |
|---|---|
| 26/11/2020 | **(27/11/2020)** |

| Name and mailing address of the ISA/ | Authorized officer |
|---|---|
| OFICINA ESPAÑOLA DE PATENTES Y MARCAS Paseo de la Castellana, 75 - 28071 Madrid (España) Facsimile No.: 91 349 53 04 | N. Vera Gutierrez Telephone No. 91 3495544 |

Form PCT/ISA/210 (second sheet) (January 2015)

## INTERNATIONAL SEARCH REPORT

| | International application No. |
|---|---|
| | PCT/ES2020/070607 |

C (continuation).                    DOCUMENTS CONSIDERED TO BE RELEVANT

| Category * | Citation of documents, with indication, where appropriate, of the relevant passages | Relevant to claim No. |
|---|---|---|
| A | CN 110157034 A (UNIV GUILIN TECHNOLOGY) 23/08/2019, (abstract) [on line] [retrieved on 23.03.2020]. Retrieved from: EPOQUE WPI Database; DW201972; n° acceso 2019-77126 G. | 1-10 |
| A | RAFIEIAN FATEMEH *et al.*; Development of hydrophobic nanocellulose-based aerogel via chemical vapor deposition for oil separation for water treatment. Cellulose, 20180531 Springer Netherlands, Netherlands., 31/05/2018, Vol. 25, N° 8, pages 4695 - 4710, ISSN 0969-0239, <DOI: 10.1007/s10570-018-1867-3> | 1-10 |
| A | OLIVEIRA PABLO BELUCK DE *et al.*; Oils sorption on hydrophobic nanocellulose aerogel obtained from the wood furniture industry waste. Cellulose, Springer Netherlands, Netherlands, 06/04/2018, Vol. 25, N° 5, Pages 3105 - 3119, ISSN 0969-0239, <DOI: doi:10.1007/s10570-018-1781-8> | 1-10 |

Form PCT/ISA/210 (continuation of second sheet) (January 2015)

## INTERNATIONAL SEARCH REPORT

Information on patent family members

International application No.

PCT/ES2020/070607

| Patent document cited in the search report | Publication date | Patent family member(s) | Publication date |
|---|---|---|---|
| US2016068650 A1 | 10.03.2016 | CN105531306 A<br>US10138346 B2<br>SG11201509053T A<br>WO2014178797 A1 | 27.04.2016<br>27.11.2018<br>30.12.2015<br>06.11.2014 |
| US2019282988 A1 | 19.09.2019 | CN110088187 A<br>WO2018106190 A1 | 02.08.2019<br>14.06.2018 |
| CN110128694 A | 16.08.2019 | NONE | |
| CN110157034 A | 23.08.2019 | NONE | |

Form PCT/ISA/210 (patent family annex) (January 2015)

**INTERNATIONAL SEARCH REPORT**

International application No.

PCT/ES2020/070607

CLASSIFICATION OF SUBJECT MATTER

*B01J13/00* (2006.01)
*B01J20/32* (2006.01)
*C08J9/42* (2006.01)
*C08J9/28* (2006.01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0653377 B1
- US 2978298 A
- CN 1101725 C
- US 6005012 A
- CN 101646622 B
- CN 103756006 A
- CN 104710647 A

**Non-patent literature cited in the description**

- **DE FRANCE, K. J. et al.** *Chemistry of Materials,* 2017, vol. 29 (11), 4609-4631
- **HU, H. et al.** *Advanced materials,* 2013, vol. 25 (15), 2219-2223
- **NGUYEN, S. T. et al.** *Industrial & engineering chemistry research,* 2013, vol. 52 (51), 18386-18391
- **PEKALA, R. et al.** *Journal of non-crystalline solids,* 1998, vol. 225, 74-80
- **PIERRE, A. C. et al.** *Chemical Reviews,* 2002, vol. 102 (11), 4243-4266
- **PIRCHER, N. et al.** *Carbohydrate Polymers,* 2014, vol. 111, 505-513